# EUROPÄISCHE PATENTSCHRIFT

(11) **EP 2 735 408 B1**
(45) Veröffentlichungstag und Bekanntmachung des Hinweises auf die Patenterteilung: **20.04.2016**
(21) Anmeldenummer: 12007959.5
(22) Anmeldetag: 27.11.2012
(51) Int. Cl.: B25J 15/10

(54) **Greifeinrichtung zum Greifen von Objekten**
Gripper device for gripping objects
Dispositif de saisie destiné à saisir des objets

(43) Veröffentlichungstag der Anmeldung: 28.05.2014
(73) Patentinhaber: FESTO AG & Co. KG, 73734 Esslingen (DE)
(72) Erfinder: Thallemer, Axel, 80796 München (DE); Diensthuber, Dominik, 4652 Fischlham (AT)
(74) Vertreter: Patentanwälte Magenbauer & Kollegen Partnerschaft mbB

(56) Entgegenhaltungen:
- EP-A1- 2 487 010
- DE-C1- 10 156 261
- US-A1- 2003 090 115
- US-A1- 2010 176 615
- US-A1- 2011 148 132

## Beschreibung

Die Erfindung betrifft eine Greifeinrichtung zum Greifen von Objekten, mit wenigstens drei Greifeinheiten, die durch eine Arbeitsbewegung zwischen einer Freigabestellung und einer das Objekt greifenden Greifstellung bewegbar sind.

In der Industrie findet man eine Vielzahl von spezialisierten Greifern, die meistens nur für eine Greifaufgabe bestimmt sind. Diese Greifer sind auf das zu greifende Objekt abgestimmt und können nur für diese eine Aufgabe eingesetzt werden. Bei Assemblierungsaufgaben werden daher häufig Greifer-Wechselsysteme eingesetzt. Diese Wechselsysteme sind mit unterschiedlichen Greifsystemen bestückt, welche zum Zusammenbau eines Werkstücks notwendig sind.

Die EP 2 487 010 A1 beschreibt einen Greifer in Form einer Roboterhand, bei dem drei Greiffinger um ein Greifzentrum herum gruppiert sind. Die relative Lage von zwei der drei Greiffinger lässt sich durch einen Verstellantrieb verstellen, wodurch insbesondere der zwischen den beiden verstellbaren Greiffingern aufgespannte Winkel einstellbar ist. Mit dem Greifer lassen sich wahlweise sphärische Objekte, beispielsweise eine Kugel, oder zylindrische Objekte, beispielsweise eine Zylinderstange, greifen.

Aufgabe der Erfindung ist es, eine Greifeinrichtung der eingangs erwähnten Art zu schaffen, die ein Höchstmaß an Modularität bietet und mehrere Greifarten in sich vereint, wobei ein Wechsel der Greifart ohne großen Aufwand und daher schnell möglich ist.

Diese Aufgabe wird durch eine Greifeinrichtung mit den Merkmalen des unabhängigen Anspruchs 1 gelöst. Weiterbildungen der Erfindung sind in den Unteransprüchen dargestellt.

Die erfindungsgemäße Greifeinrichtung zeichnet sich dadurch aus, dass die Greifeinheiten derart um ein Greifzentrum herum gruppiert sind, dass die wenigstens drei Arbeitsebenen ihrer Greifelemente winkelig und radial bezüglich des Greifzentrums oder parallel versetzt zueinander ausgerichtet sind, wobei wenigstens zwei der Greifeinheiten eine Verstellantriebseinrichtung mit wenigstens einem Verstellantrieb zugeordnet ist, um die Arbeitsebenen der Greifelemente aktuatorisch durch eine Verstellbewegung zwischen radialer und parallel zueinander versetzter Ausrichtung zu verstellen.

Dadurch ist es möglich, zwischen linearem Greifen und räumlichem Greifen zu wechseln, ohne dass einzelne Greifeinheiten ummontiert werden müssen. Mit der erfindungsgemäßen Greifeinrichtung ist also entweder ein Raumgriff oder ein Lineargriff mit zueinander parallel versetzten Arbeitsebenen der Greifelemente durchführbar. Dadurch ist es möglich, die Greifeinrichtung an unterschiedliche Greifaufgaben anzupassen und somit unterschiedlich ausgebildete Objekte zu greifen. Beispielsweise eignet sich der Raumgriff insbesondere zum Greifen von voluminösen Körpern, während der Lineargriff eher zum Greifen von flächigen Objekten geeignet ist.

Bei einer Weiterbildung der Erfindung ist mehreren Greifeinheiten ein einzelner Verstellantrieb zugeordnet, über den die Arbeitsebenen der Greifelemente der zugeordneten Greifeinheiten synchron zwischen radialer und parallel versetzter Ausrichtung verstellbar sind. Prinzipiell wäre es jedoch auch möglich, jeder Greifeinheit ein Verstellantrieb zuzuordnen, jedoch wird beim Einsatz von Verstellantrieben, die mehrere Greifeinheiten ansteuern, der Kostenaufwand und auch das Gewicht der Greifeinrichtung minimiert.

Bei einer Weiterbildung der Erfindung ist von den drei Greifeinheiten wenigstens eine bezüglich ihrer Ausrichtung der Arbeitsebene des Greifelements unverstellbar angeordnet. Beispielsweise ist es möglich, dass die Greifeinrichtung aus drei Greifeinheiten besteht, von denen zwei verstellbar und eine unverstellbar bezüglich deren Ausrichtung der Arbeitsebenen der zugeordneten Greifelemente ausgebildet sind. Selbstverständlich ist es möglich, die Greifeinrichtung mit mehr als drei Greifeinheiten auszurüsten, beispielsweise wären sechs Greifeinheiten denkbar, von denen beispielsweise vier Greifeinheiten unverstellbar sind. Theoretisch wäre es möglich, jede Greifeinheit verstellbar auszubilden, jedoch wird dadurch wieder der Kostenaufwand erhöht.

In besonders bevorzugter Weise sind zwischen dem wenigstens einen Verstellantrieb und den zugeordneten verstellbaren Greifeinheiten Kopplungsmittel zur Übertragung der Verstellbewegung auf die Greifeinheiten angeordnet. Die vom Verstellantrieb erzeugte Verstellbewegung kann also über die Kopplungsmittel auf die verstellbaren Greifeinheiten übertragen werden.

Es ist möglich, dass die Kopplungsmittel ein Getriebe umfassen.

In besonders bevorzugter Weise ist das Getriebe als Gelenkgetriebe mit mehreren gelenkig miteinander verbundenen Gelenkhebeln ausgebildet. Das Gelenkgetriebe kann also einerseits an den Verstellantrieb und andererseits an die verstellbaren Greifeinheiten angekoppelt sein. Es ist möglich, dass das Gelenkgetriebe mehrere Getriebeketten aufweist, von denen jeweils eine einer verstellbaren Greifeinheit zugeordnet ist. Prinzipiell wäre die Übertragung der Verstellbewegung auch durch andere Getriebearten denkbar, beispielsweise mittels Riemengetriebe oder Zahnradgetriebe.

In besonders bevorzugter Weise handelt es sich bei der Verstellbewegung um eine Schwenkbewegung. Es ist also möglich, dass die verstellbaren Greifeinheiten bei Einleitung der Verstellbewegung zwischen radial und parallel zueinander versetzter Ausrichtung verschwenkbar sind. Theoretisch wären auch andere Verstellbewegungsarten denkbar, maßgeblich ist, dass die Greifeinheiten und deren zugeordneten Greifelemente bezüglich des Greifzentrums unterschiedlich ausrichtbar sind, um die Arbeitsebenen zwischen radialer und parallel zueinander versetzter Ausrichtung zu verstellen.

In besonders bevorzugter Weise weisen die Greifeinheiten jeweils eine Basiseinheit auf, die eine Befestigungsschnittstelle zur lösbaren Befestigung des zugeordneten Greifelements aufweisen. Durch diese Ausgestaltung wird eine Greifeinrichtung mit hoher Modularität geschaffen, da die Basiseinheit mit unterschiedlich ausgebildeten Greifelementen bestückt werden kann. Ferner ist es möglich, dass nicht alle Befestigungsschnittstellen mit Greifelementen bestückt sind, wodurch die Anzahl der aktiven Greifeinheiten variabel einstellbar ist. Auch dadurch ist eine große Variabilität und Anpassung an die zu leistende Greifaufgabe möglich.

Es ist möglich, dass die Basiseinheit mit dem Gelenkgetriebe gekoppelt und um eine Schwenkachse schwenkbar gelagert ist. In diesem Fall wird die Verstellbewegung der Greifeinheit also von deren Basiseinheit ausgeführt.

Es ist denkbar, dass die Befestigungsschnittstelle eine insbesondere T-förmig ausgebildete Befestigungsnut umfasst. Dies erlaubt ein einfaches und schnelles Wechseln oder Umbestücken der Greifeinheiten mit Greifelementen. Es ist jedoch auch möglich, die Befestigungsschnittstelle andersartig auszugestalten.

Bei einer Weiterbildung der Erfindung ist den wenigstens zwei verstellbaren Greifeinheiten eine Blockiereinrichtung mit wenigstens einem Blockierelement zur Blockierung der aktuell eingestellten Ausrichtung der Arbeitsebenen der zugeordneten Greifelemente zugeordnet, wobei das Blockierelement zwischen einer Blockierstellung und einer die Verstellbewegung ermöglichenden Freigabestellung verstellbar ist. Dadurch wird erzielt, dass die aktuell eingestellte Greifart, also Linien- oder Radialgriff, auch während des Greifbetriebs zuverlässig gehalten wird. Beispielsweise soll dadurch verhindert werden, dass die Basiseinheiten der verstellbaren Greifeinheiten aus ihrer eingenommenen Stellung wieder zurückschwenken.

Besonders bevorzugt besitzt die Blockiereinrichtung wenigstens einen Blockierantrieb zur aktuatorischen Verstellung des Blockierelements zwischen der Blockier- und der Freigabestellung. Durch Aktivierung des Blockierantriebs lässt sich also das Blockierelement zwischen der Blockier- und der Freigabestellung verstellen.

In besonders bevorzugter Weise weisen die Greifeinheiten jeweils einen individuellen Greifantrieb auf, über den die Arbeitsbewegung zwischen der Greif- und der Offenstellung erzeugbar ist. Dadurch ist eine ganz individuelle Ansteuerung der Greifeinheiten unabhängig voneinander möglich, wodurch sich eine höhere Variabilität beim Greifen ergibt.

In besonders bevorzugter Weise ist der jeweilige Greifantrieb an Bord des Greifelements der Greifeinheit angeordnet. Der Greifantrieb ist also nicht an der Basiseinheit der Greifeinheit angeordnet, sondern an Bord des Greifelements, das wiederum zweckmäßigerweise lösbar an der Basiseinheit befestigbar ist. Dies ermöglicht eine einfache Wartung und Austausch des Greifantriebs.

In besonders bevorzugter Weise besitzt das Greifelement eine Greifelement-Basis mit einer Befestigungsschnittstelle zur lösbaren Befestigung eines in der Greifstellung in Anlage zum Objekt befindlichen Wirkelements. Dadurch wird eine noch größere Modularität geschaffen, da auch die Wirkelemente gewechselt werden können, ohne dass die Greifelement-Basis gewechselt wird. Es ist also möglich, dass die Greifelement-Basis an der Befestigungsschnittstelle der Basiseinheit der Greifeinheit befestigt bleibt, während das Wirkelement getauscht wird.

Es ist möglich, dass das Wirkelement als Flossenstrahlelement ausgebildet ist.

In besonders bevorzugter Weise besitzt das Wirkelement ein Wirkglied aus biegeschlaffem Material. Dadurch ist es möglich, dass sich das Wirkglied optimal an die äußere Form des zu greifenden Objekts anpassen kann.

Es ist möglich, dass das biegeschlaffe Material faserverstärkt ist.

Um beim Greifen die Greifkraft vom Wirkglied auf das zu greifende Objekt zu übertragen, ist eine Spanneinrichtung vorgesehen, über die das biegeschlaffe Wirkglied gespannt werden kann. Die Spanneinrichtung kann einen Stoßdämpfer aufweisen, mit dem die Spannkraft in das biegeschlaffe Wirkglied einleitbar ist.

Das Wirkglied ist bevorzugt als Lamelle ausgebildet. Es kann beispielsweise austauschbar am zugeordneten Wirkelement befestigt sein.

In besonders bevorzugter Weise sind Verstellantrieb, Greifantrieb und/oder Blockierantrieb als fluidische, insbesondere pneumatische Antriebe ausgebildet.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines ersten Ausführungsbeispiels der erfindungsgemäßen Greifeinrichtung mit den Greifeinheiten in Offenstellung,
- Figur 2: die Greifeinrichtung von Figur 1 mit den Greifeinheiten in Greifstellung,
- Figur 3: eine schematische Darstellung der Greifeinrichtung ohne Greifelemente,
- Figur 4: eine schematische Darstellung zweier verstellbarer Greifeinheiten, die für den Lineargriff ausgerichtet sind,
- Figur 5: eine schematische Darstellung zweier Greifeinheiten, die für den Raumgriff ausgerichtet sind,
- Figur 6: eine schematische Darstellung der kinematischen Kette zur Übertragung der Verstellbewegung vom Verstellantrieb auf die verstellbaren Greifeinheiten,
- Figur 7: die Ausgestaltung der in Figur 6 gezeigten kinematischen Kette in Form eines Gelenkgetriebes,
- Figur 8: eine perspektivische Darstellung eines zweiten Ausführungsbeispiels der erfindungsgemäßen Greifeinrichtung, bei dem die Greifelemente in Offenstellung sind,
- Figur 9: die Greifeinrichtung von Figur 8 mit den Greifeinheiten in Greifstellung,
- Figur 10: eine schematische Darstellung eines Greifantriebs in eingefahrener Stellung,
- Figur 11: der Greifantrieb von Figur 10 in ausgefahrener Stellung,
- Figur 12: eine Ausführungsform eines Wirkelements, mit dem ein Greifelement bestückbar ist,
- Figur 13: eine alternative Ausführungsform eines Wirkelements,
- Figur 14: eine schematische Draufsicht auf die Greifeinrichtung mit zwei Greifeinheiten für den Lineargriff, wobei diese Ausführungsform nicht zur Erfindung gehört,
- Figur 15: eine Draufsicht auf die Greifeinrichtung, bestückt mit drei Greifeinheiten, ausgerichtet für den Raumgriff,
- Figur 16: eine Draufsicht auf die Greifeinrichtung von Figur 15 mit den Greifeinheiten, ausgerichtet für den Lineargriff und
- Figur 17: eine Draufsicht auf die Greifeinrichtung, bestückt mit vier Greifeinheiten.

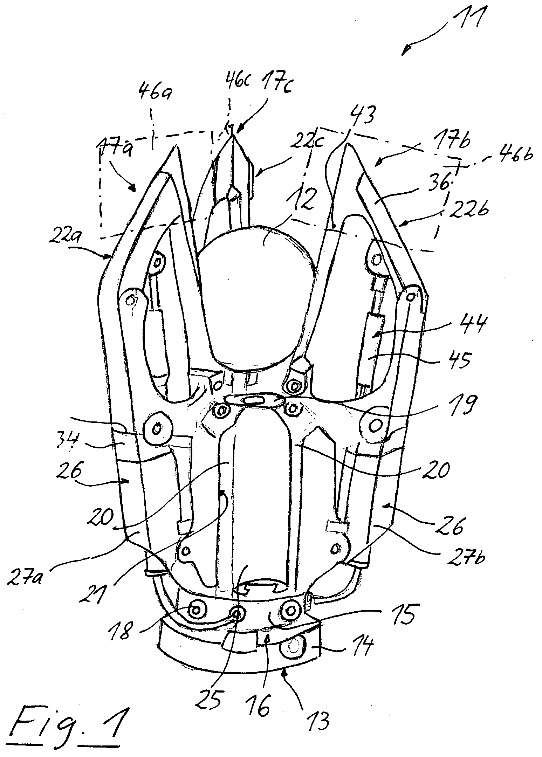

Die Figur 1 zeigt ein erstes Ausführungsbeispiel der erfindungsgemäßen Greifeinrichtung 11. Die Greifeinrichtung 11 dient zum Greifen von Objekten 12 unterschiedlicher Art.

Die Greifeinrichtung 11 befindet sich in der Regel an einem Handhabungsgerät (nicht dargestellt), das auch als Greiferführungsgetriebe bezeichnet werden kann. Die Hauptaufgabe der Greifeinrichtung 11 ist das Herstellen, Aufrechterhalten und Lösen der Verbindung zwischen dem Objekt 12 und dem Handhabungsgerät. Je nach Anwendungszahl kommen zusätzliche Sonderfunktionen wie Änderung der Position des Objekts, Änderung der Orientierung des Objekts und/oder Informationsaufnahme von Objekteigenschaften oder anderen Eigenschaften, beispielsweise mit Hilfe von Sensoren hinzu. Es können beispielsweise Anwesenheitskontrolle, Positions- und Lageerkennung für Objekte, sowie Kraft-, Moment- und Wegmessungen durchgeführt werden.

Die Greifeinrichtung 11 besitzt eine Kopplungsschnittstelle 13 zur Ankopplung an das Greiferführungsgetriebe, das beispielsweise ein Industrieroboter sein kann. Diese Kopplungsschnittstelle 13 ist im Beispielsfall an einer Adapterplatte 14 ausgebildet, die an einer zugeordneten Montageplatte des Industrieroboters montiert werden kann.

Die Adapterplatte 14 ist über eine Zentriervorrichtung 16 mit einer Belüftungsplatte 15 gekoppelt, die ihrerseits mehrere Greifeinheiten 17a, 17b, 17c trägt.

Die Zentriervorrichtung 16 kann beispielsweise ein in der Adapterplatte 14 eingelassenes Passungsloch (nicht dargestellt) umfassen, in das ein von der Unterseite der Belüftungsplatte 15 nach unten abstehender Zentrierzapfen eintaucht und dort mittels Befestigungsmitteln gesichert ist.

Wie insbesondere in Figur 1 dargestellt, ist die Belüftungsplatte 15 Teil eines Belüftungssystems für die im Beispielsfall pneumatische Greifeinrichtung, auf die nachfolgend noch näher eingegangen wird.

Am Außenumfang der Belüftungsplatte 15 sitzen mehrere Fluidanschlüsse 18, über die Druckfluid, insbesondere Druckluft eingespeist und im Falle von Arbeits-Fluidanschlüssen an die entsprechenden Antriebe weiterleitbar ist. Je nachdem mit wie viel Greifeinheiten 17a-c die Greifeinrichtung 11 bestückt ist, fungiert auch dieselbe Anzahl von Fluidanschlüssen als Arbeits-Fluidanschlüsse zur Versorgung der dort angeordneten Antriebe.

Auf der Belüftungsplatte 15 ist ein Grundkörper 19 montiert, der seinerseits Bestandteil der Greifeinheiten 17a-c ist. Der Grundkörper 19 bildet somit auch das Greifzentrum, um das herum die Greifeinheiten 17a-c herum gruppiert sind.

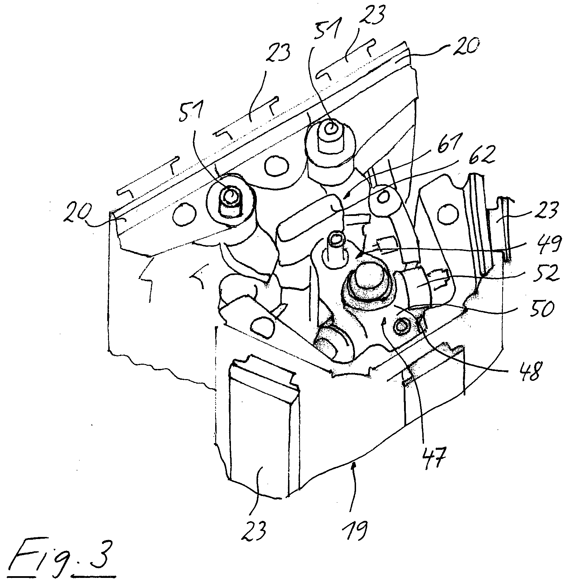

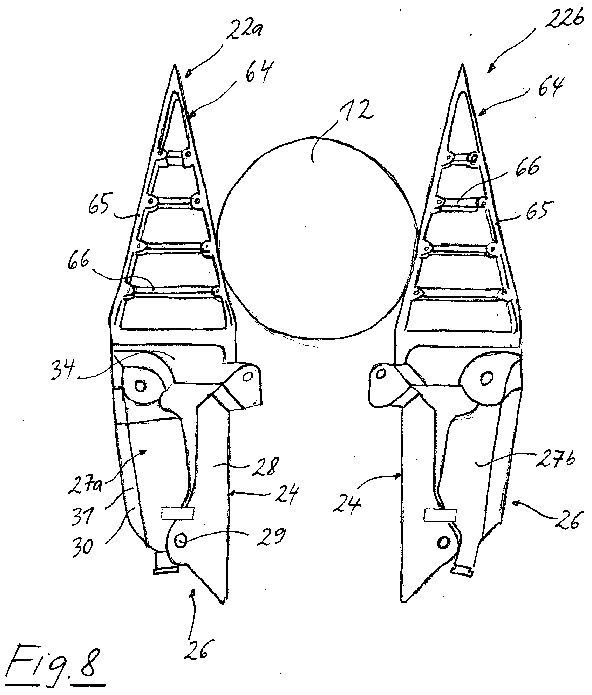

Wie insbesondere in Figur 1 dargestellt, besitzen die Greifeinheiten 17a-c jeweils eine Basiseinheit 20, die eine Befestigungsschnittstelle 21 zur lösbaren Befestigung eines zugeordneten Greifelements 22 aufweisen. Die Befestigungsschnittstelle 21 umfasst eine T-förmig ausgebildete Befestigungsnut 23 (Figur 3), auf die ein zugeordneter Montageabschnitt 24 (Figur 8) des Greifelements 22 in einfacher Weise aufschiebbar ist.

Wird die Befestigungsschnittstelle 21 am Basiselement 20 nicht genutzt, so wird die Befestigungsnut 23 mittels einer Nutabdeckung 25 abgedeckt.

Zu den Greifeinheiten 17a-c zählen neben den bereits erwähnten Basiseinheiten 20 die zugeordneten Greifelemente 22a-c. Im in Figur 1 dargestellten Beispielsfall sind drei Befestigungsschnittstellen der Basiseinheiten 20 mit Greifelementen 22a-c bestückt. Im Beispielsfall sind insgesamt sechs Befestigungsschnittstellen 21 vorgesehen, wovon drei ungenutzt sind. Insgesamt ergibt sich durch die sechs Befestigungsschnittstelle eine hexagonale Form des Grundkörpers 19. Die Greifeinrichtung 11 wäre im Beispielsfall also mit maximal sechs Greifeinheiten 17a-f ausrüstbar.

Die Greifelemente 22a-c umfassen eine Greifelement-Basis 26, an der der Montageabschnitt 24 zur Befestigung an der zugeordneten Befestigungsnut 23 der Basiseinheit 20 ausgebildet ist.

Charakteristisch ist, dass jeder Greifeinheit 17a-c ein Greifantrieb 27a-c zugeordnet ist. Die Greifantriebe 27a-c sind an Bord des Greifelements 22 untergebracht, befinden sich also nicht an der Basiseinheit 20 der Greifeinheit 17a-c. Der Greifantrieb 27a-c erzeugt die Arbeitsbewegung mittels der Greifelemente 22a-c, die zwischen der Greif- und der Offenstellung verstellbar sind. Die Figur 1 zeigt jedenfalls die Offenstellung der Greifeinheiten 17a-c.

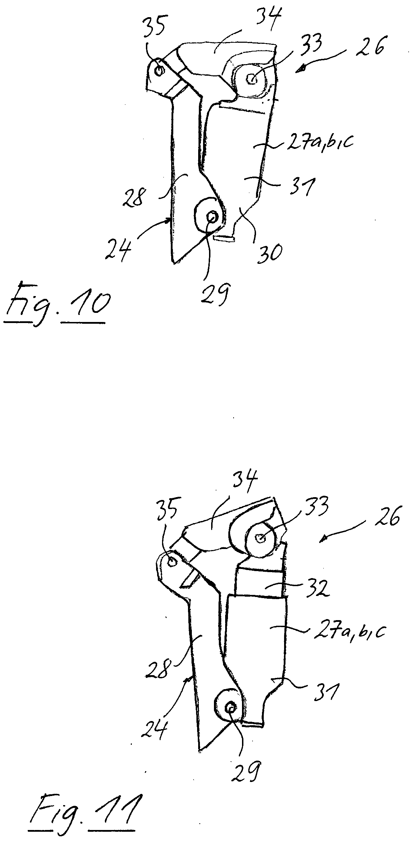

Die Figuren 10 und 11 zeigen eine Greifelement-Basis 26 mit integriertem Greifantrieb 27a-c. Die Greifelementbasis 26 besitzt insgesamt eine Winkelgreiferkinematik und ist als eine Art Kniehebel ausgestaltet. Es ist ein erster Hebelarm 28 vorgesehen, an dessen Rückseite der zuvor bereits erwähnte Montageabschnitt 24 ausgebildet ist, der auf die zugeordnete Befestigungsnut 23 aufschiebbar ist. Der erste Hebelarm 28 der Greifelement-Basis 26 ist somit ortsfest und unverschwenkbar an der zugeordneten Basiseinheit 20 gelagert. Der erste Hebelarm 28 ist über ein erstes Gelenk 29 mit einem zweiten Hebelarm 30 verbunden, der um das erste Gelenk 29 verschwenkbar am ersten Hebelarm 28 gelagert ist. Der zweite Hebelarm 30 besitzt ein Gehäuse 31, in dem sich der Greifantrieb 27a-c befindet. Der Gelenkantrieb 27a-c ist im Beispielsfall ein pneumatisch betriebener Arbeitszylinder in Miniaturbauform, der beispielsweise an seinem Außenumfang ein Außengewinde aufweist und in ein im Gehäuse 31 befindliches Innengewinde eingeschraubt ist. Der Arbeitszylinder wiederum besitzt ein Zylindergehäuse (nicht dargestellt), in dem ein Kolben (nicht dargestellt) mittels Fluiddruck verschieblich gelagert ist. An dem Kolben ist ein Abtriebsteil 32 ausgebildet, das gemäß Figur 10 in das Zylindergehäuse eingefahren und gemäß Figur 11 aus dem Zylindergehäuse ausgefahren ist. An dem Abtriebsteil 32 ist über ein weiteres Gelenk 33 ein sogenanntes Wirksystembasis-Glied 34 schwenkbar gelagert, das andernends um eine Schwenkachse 35 schwenkbar mit dem ersten Hebelarm 28 verbunden ist. Wie die Zusammenschau von Figur 10 und Figur 11 zeigt, wird mittels des Greifantriebs 27a-c die Winkelstellung des Wirksystembasis-Glieds 34 verändert, das dabei um die Schwenkachse 35 geschwenkt wird.

Wie insbesondere in Figur 1 dargestellt, umfasst das Greifelement 22a-c neben der zuvor beschriebenen GreifelementBasis ein Wirkelement 36, das an einer Befestigungsschnittstelle am Wirksystembasis-Glied 34 lösbar befestigt ist und in der Greifstellung in Anlage zum Objekt 12 liegt.

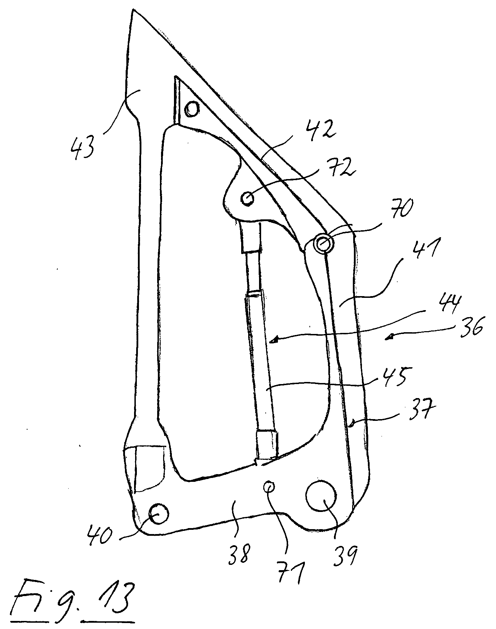

Wie insbesondere in Figur 13 dargestellt, ist das gemäß dem ersten Ausführungsbeispiel eingesetzte Wirkelement 36 ebenfalls kniehebelartig ausgestaltet. Es besitzt ein gabelartiges Hebelteil 37 mit einem ersten Hebelschenkel 38, der sich von einer mit dem Gelenk 33 an der Greifelement-Basis erstreckenden Gelenkstelle 39 zu einer mit der Schwenkachse 35 verbundenen weiteren Gelenkstelle 40 erstreckt. Das Wirkelement 36 ist also insgesamt mit diesem Hebelschenkel 38 am Wirksystembasis-Glied 34 gelenkig montiert. Das Hebelteil 37 besitzt einen zweiten Hebelschenkel 41, der sich von der Gelenkstelle 39 weg erstreckt und der an seinem der Gelenkstelle 39 entgegengesetzten Ende über ein Gelenk 70 verfügt, über das das Hebelteil 37 mit einem weiteren Hebelteil 42 schwenkbar gekoppelt ist.

Wie insbesondere in Figur 13 dargestellt, umfasst das Wirkelement 36 noch ein Wirkglied 43 aus biegeschlaffem Material, bei dem es sich beispielsweise um Elastomermaterial mit oder ohne Faserverstärkung handeln kann. Dies gewährleistet, dass sich das Wirkglied 43 optimal an die äußere Oberfläche des zu greifenden Objekts 12 anpassen kann. Das Wirkglied 43 ist als Lamelle oder Band ausgestaltet und ist einerseits am freien Ende des zweiten Hebelteils 42 und andererseits am freien Ende des mit der Gelenkstelle 40 ausgestatteten ersten Hebelschenkel 38 des ersten Hebelteils 37 gelenkig gelagert. Um in der Greifstellung eine gewisse Spannkraft auf das zu greifende Objekt 12 zu bringen, ist eine Spanneinrichtung 44 vorgesehen. Die Spanneinrichtung 44 umfasst im Beispielsfall einen Stoßdämpfer 45, der einerseits über eine Gelenkstelle 72 am zweiten Hebelteil 42 gelenkig gelagert ist und andererseits mit dem ersten Hebelteil 37 über eine weitere Gelenkstelle 71 gelenkig verbunden ist. Der Stoßdämpfer 45 ist im Beispielsfall als Gasdruckzylinder ausgebildet, wirkt also zwischen dem Hebelschenkel 38 und dem über das zweite Hebelteil 42 verschwenkbaren Wirkglied 43 und hält somit das lamellenartige Wirkglied unter Spannung.

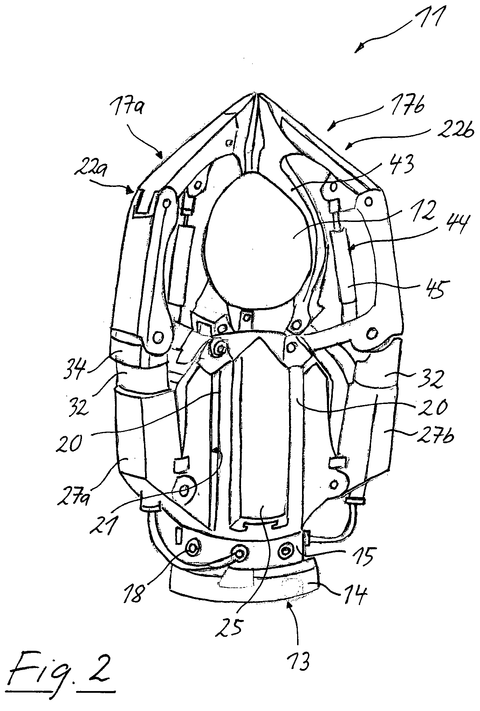

Wie insbesondere durch die Zusammenschau von Figur 1 und Figur 2 dargestellt, werden die Greifantriebe 27a-c zum Einleiten der Arbeitsbewegung mit Druckluft beaufschlagt, so dass das in das Zylindergehäuse eingefahrene Abtriebsteil 32 ausfährt, wie in Figur 11 dargestellt. Dabei ändert sich die Orientierung des Wirksystembasis-Glieds 34, da dieses um die Schwenkachse 35 verschwenkt, wodurch gleichzeitig das angekoppelte Wirkelement 36 auf das zu greifende Objekt zugeschwenkt wird. Dabei gelangt das biegeschlaffe Wirkglied 43 in Kontakt mit dem zu greifenden Objekt und legt sich an die im Beispielsfall konvexe Wölbung der Objektoberfläche an. Bei der Greifbewegung wird das obere, zweite Hebelteil 42 um das Gelenk 70 nach unten gezogen, wobei der Stoßdämpfer 45 dieser Bewegung entgegenwirkt. Durch diesen Gegendruck wird das Objekt 12 festgehalten.

Wie in Figur 1 und Figur 2 gezeigt, sind die Greifeinheiten 17a-c der Greifeinrichtung 11 für einen Raumgriff ausgerichtet. Dabei sind die Arbeitsebenen 46a-c der Greifelemente 22a-c radial bezüglich des Greifzentrums ausgerichtet. Die Greifelemente 22a-c verschwenken also bei Aktivierung des zugeordneten Greifantriebs in der jeweiligen Arbeitsebene 46a-c in radialer Richtung.

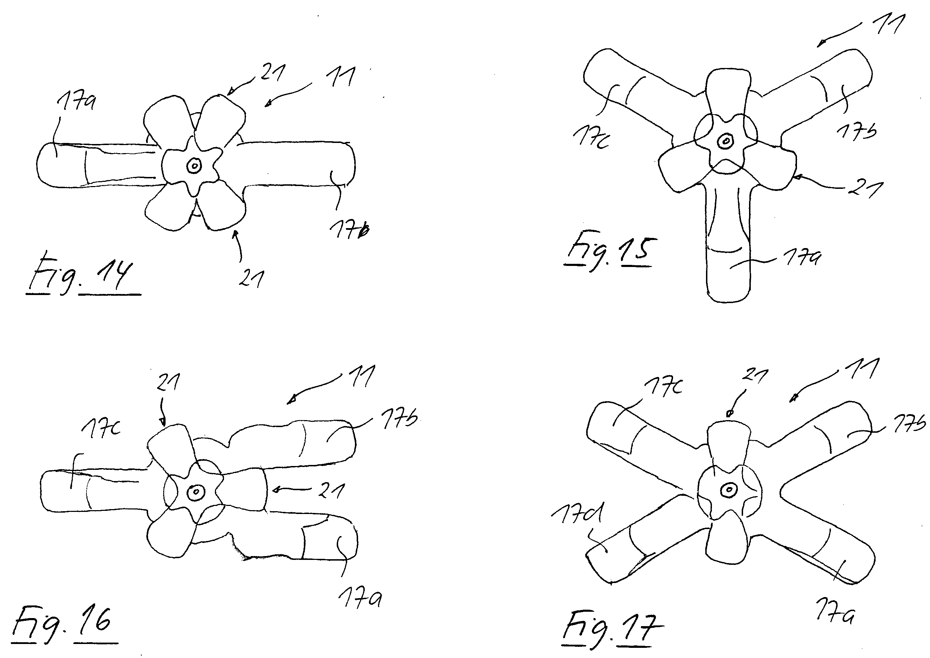

Wie insbesondere in Figur 17 gezeigt, ist dieser Raumgriff auch mit vier Greifeinheiten 17a-d und demnach vier Greifelementen 22a-d durchführbar. Theoretisch ließen sich auch sechs Greifelemente radial verschwenken. Der Raumgriff bzw. Radialgriff eignet sich besonders zum Greifen von voluminösen Objekten, wobei das zuvor beschriebene Wirkelement 36 besonders zum Festhalten konvex gewölbter Objekte 12 geeignet ist.

Sollen nun jedoch flächige, beispielsweise plattenartige Objekte gegriffen werden, so eignet sich dieser Raumgriff nicht. Um die Greifart auf Liniengriff zu wechseln umfasst die Greifeinrichtung 11 eine Verstellantriebseinrichtung 47 (Figur 3) mit wenigstens einem Verstellantrieb 48, wobei die Verstellantriebseinrichtung 47 wenigstens zwei der Greifeinheiten 17a, 17b zugeordnet ist, um die Arbeitsebenen 46a-c der Greifelemente 22a-c aktuatorisch durch eine Verstellbewegung zwischen radialer und parallel zueinander versetzter Ausrichtung zu verstellen.

Der Verstellantrieb 48 ist ebenfalls als pneumatischer Antrieb ausgebildet und verfügt über einen pneumatisch wirkenden Arbeitszylinder in Miniaturbauweise, der ähnlich oder identisch zum Greifantrieb ausgebildet sein kann. Der Verstellantrieb 48 verfügt über ein Zylindergehäuse (nicht dargestellt) in dem ein Verstellkolben mittel Fluiddruck verschieblich geführt ist. Der Verstellkolben ist mit einer Kolbenstange verbunden, die bei Fluiddruckbeaufschlagung aus dem Zylindergehäuse ausfahrbar ist. Es ist ein einfach wirkender Arbeitszylinder vorgesehen, so dass im Falle der Entlüftung des Zylinders eine Rückstellung mittels einer Rückstellfeder erfolgt. Wie insbesondere in Figur 3 dargestellt, ist die Kolbenstange mit einer Führungseinrichtung 49 verbunden, die an zwei links und rechts der Kolbenstange angeordneten Führungsstäben beweglich geführt ist. Die Führungseinrichtung umfasst einen Führungskörper 50, der über zwei Lageraugen verfügt, an denen Kopplungsmittel angreifen, die seinerseits eine Verstellbewegung auf die ihrerseits um eine Schwenkachse verschwenkbaren Basiseinheiten 20 der verstellbaren Greifeinheiten 17a, 17b übertragen.

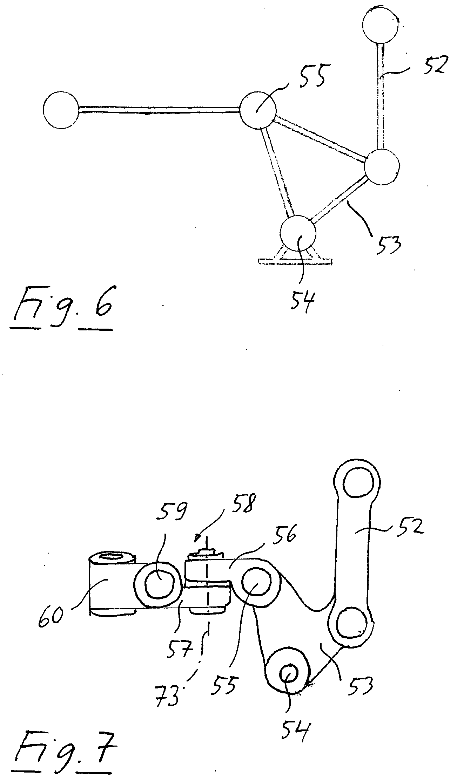

Die Kopplungsmittel umfassen ein Getriebe in Form eines Gelenkgetriebes, dessen kinematische Grundform in Figur 6 dargestellt ist. Das Gelenkgetriebe umfasst also zwei Getriebeketten, von denen in Figur 7 eine dargestellt ist. Jede dieser Getriebeketten ist einer verschwenkbaren Basiseinheit 20 zugeordnet. Die Getriebekette umfasst mehrere gelenkig miteinander verbundene Gelenkhebel. Es ist hier ein Pleuelhebel 52 vorgesehen, der einerseits schwenkbar am Lagerauge des Führungskörpers 50 gelagert ist und andererseits an einem Umlenkungsdreieck 53 schwenkbar gelagert ist. Das Umlenkungsdreieck 53 wiederum ist an einer ortsfesten Schwenkachse 54 schwenkbar gelagert. Das Umlenkungsdreieck 53 besitzt ein drittes Gelenk 55, das gelenkig mit einem Ausgleichelement 58 verbunden ist. Das Ausgleichselement 58 umfasst zwei Schwenkglieder 56, 57, an denen ein erstes Schwenkglied 56 an der Schwenkachse 55 mit dem Umlenkungsdreieck 53 schwenkbar verbunden ist und andererseits über ein Ausgleichsgelenk 73, dessen Gelenkachse vertikal also in Ausrichtung des Pleuelhebels 52 ausgerichtet ist. Das andere Schwenkglied 57 ist einerseits über das Ausgleichsgelenk 73 mit dem ersten Schwenkglied 56 verbunden und andererseits über eine horizontale Gelenkachse 59 mit einem Lagerbuchsenglied 60 schwenkbar verbunden. Das Lagerbuchsenglied 60 wiederum ist in der montierten Stellung in eine Aufnahme am zugeordneten Basiselement 20 eingetaucht und dort um ein in der Basiseinheit 20 untergebrachtes Schwenkachsglied schwenkbar angeordnet. An der Basiseinheit 20 wiederum sitzt die Schwenkachse 51 der Basiseinheit 20 und zwar exzentrisch zur Schwenkachse des Lagerbuchsenglieds 60.

In identischer Weise ist die Basiseinheit 20 in der anderen verstellbaren Greifeinheit angekoppelt.

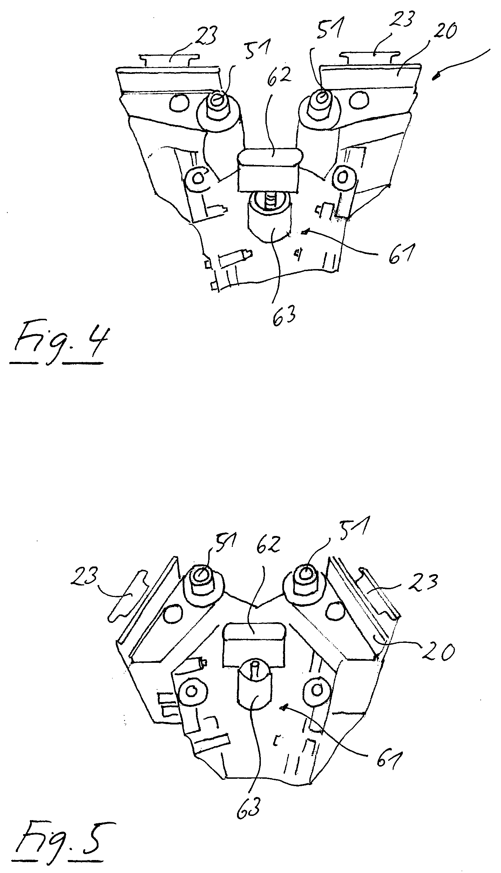

Um die beiden verstellbaren Greifeinheiten 17a, 17b zwischen dem in den Figuren 1 und 2 gezeigten Raumgriff, und dem in Figur 16 gezeigten Lineargriff zu verstellen, wird der Stellantrieb 48, der auf beide Basiseinheiten 20 gleichzeitig wirkt, womit diese synchron verstellt werden, aktiviert. Wie insbesondere die Zusammenschau der Figuren 4 und 5 zeigt, wird ausgehend von der in Figur 5 dargestellten Stellung der beiden Basiseinheiten der gemeinsame Verstellantrieb 48 aktiviert, indem er mit Druckluft beaufschlagt wird. Dabei fährt die Kolbenstange aus dem Zylindergehäuse aus, so dass der Führungskörper 50 an den Führungsstangen nach oben bewegt wird, wodurch auch die beiden Pleuelhebel 52 nach oben bewegt werden. Dies hat zur Folge, dass die beiden Umlenkungsdreiecke 53 um die Schwenkachse 54 in Gegen-Uhrzeigerrichtung verschwenken, was insgesamt Druck auf das angekoppelte Ausgleichselement 58 gibt, das gemäß Figur 7 nach links bewegt wird, so dass das Lagerbuchsenglied 60 und das angekoppelte Schwenkachsglied der Basiseinheit 20 in Uhrzeigerrichtung ausklappen, bis die in Figur 4 gezeigte Stellung erreicht ist. Bei dieser Bewegung kann das Ausgleichselement 58 ausknicken, da es um das Ausgleichsgelenk 73 gelagert ist.

Um die in Figur 4 oder die in Figur 5 gezeigte Stellung zu blockieren, ist eine Blockiereinrichtung 61 vorgesehen, die im Beispielsfall ein Blockierelement 62 aufweist. Wie insbesondere in den Figuren 4 und 5 gezeigt, ist das Blockierelement 62 zwischen einer die Schwenkbewegung der beiden Basiseinheiten 20 blockierenden Blockierstellung und die Schwenkbewegung der beiden Basiseinheiten 20 ermöglichenden Freigabestellung verstellbar. Zur Verstellung des Blockierelements 62 dient ein Blockierantrieb 63, der ebenfalls als fluidischer, insbesondere pneumatischer Antrieb ausgebildet ist.

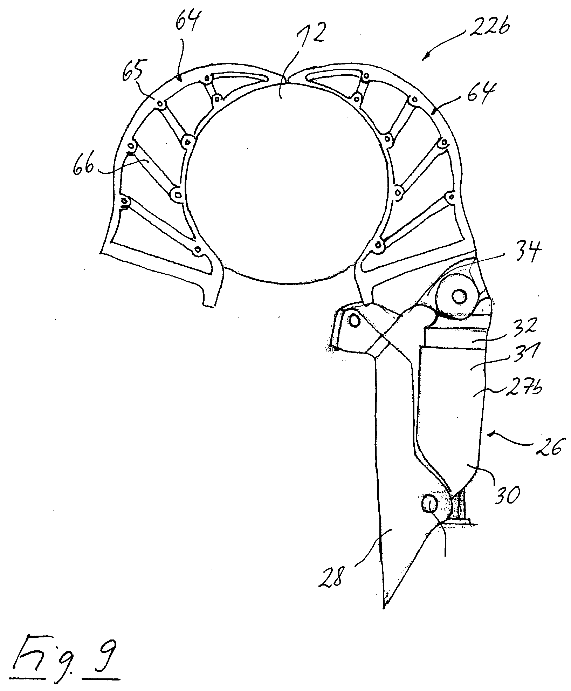

Figur 8 zeigt ein zweites Ausführungsbeispiel der erfindungsgemäßen Greifeinrichtung 11. Das zweite Ausführungsbeispiel unterscheidet sich von dem zuvor beschriebenen ersten Ausführungsbeispiel durch die andersartige Ausgestaltung der Wirkelemente 36 der Greifelemente 22a-c. Gemäß zweitem Ausführungsbeispiel sind die Wirkelemente 36 als Flossenstrahlelemente 64 ausgestaltet, die aus einer spitzen, dreieckförmigen Hülle 65 besteht, die durch Stifte gelenkig mit Querstreben 66 verbunden ist. Das Flossenstrahlelement 64 wird bei der Montage am Wirksystem-Basisglied 34 montiert. Aufgrund der Flexibilität der Hülle 65, verbunden mit den gelenkigen Querstreben 66, passt sich das Flossenstrahlelement 64 ebenfalls passgenau an die konvexe Oberfläche des zu greifenden Objekts 12 an, wie in Figur 9 gezeigt.

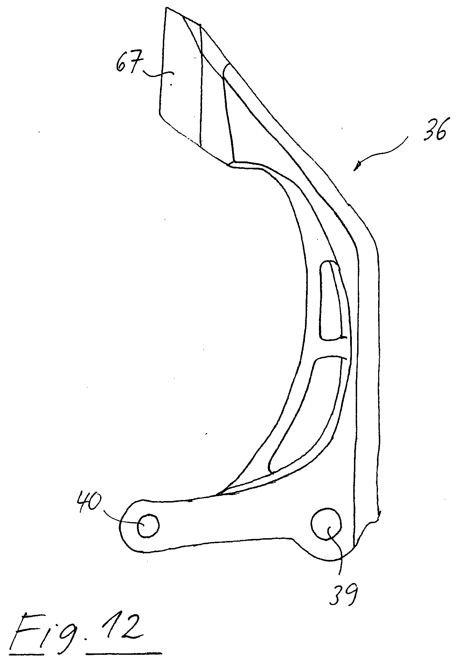

Figur 12 zeigt schließlich eine weitere Ausführungsform des Wirkelements 36. Das Wirkelement 36 besteht gemäß drittem Ausführungsbeispiel aus einem einteiligen Hebel, an dessen freiem Ende eine Fingerspitze 67 beispielsweise aus Elastomermaterial angeordnet ist.

## Patentansprüche

1. Greifeinrichtung zum Greifen von Objekten (12), mit wenigstens drei Greifeinheiten (17a-c), die durch eine Arbeitsbewegung zwischen einer Freigabestellung und einer das Objekt (12) greifenden Greifstellung bewegbar sind, **dadurch gekennzeichnet, dass** die Greifeinheiten (17a-c) derart um ein Greifzentrum herum gruppiert sind, dass die wenigstens drei Arbeitsebenen (46a-c) ihrer Greifelemente (22a-c) winkelig und radial bezüglich des Greifzentrums oder parallel versetzt zueinander ausgerichtet sind, wobei wenigstens zwei der Greifeinheiten (17a-b) eine Verstellantriebseinrichtung (47) mit wenigstens einem Verstellantrieb (48) zugeordnet ist, um die Arbeitsebenen (46a-c) der Greifelemente (22a-c) aktuatorisch durch eine Verstellbewegung zwischen radialer und parallel zueinander versetzter Ausrichtung zu verstellen.

2. Greifeinrichtung nach Anspruch 1, **dadurch gekennzeichnet, dass** mehreren, insbesondere zwei Greifeinheiten (17a, 17b) ein einzelner Verstellantrieb (48) zugeordnet ist, über den die Arbeitsebenen (46a-c) der Greifelemente (22a-c) der zugeordneten Greifeinheiten (17a-c) synchron zwischen radialer und parallel versetzter Ausrichtung verstellbar sind.

3. Greifeinrichtung nach Anspruch 1 oder 2, **dadurch gekennzeichnet, dass** von den drei Greifeinheiten (17a-c) wenigstens eine bezüglich ihrer Ausrichtung der Arbeitsebene (46c) des Greifelements (22c) unverstellbar angeordnet ist.

4. Greifeinrichtung nach einem der vorhergehenden Ansprüche, **dadurch gekennzeichnet, dass** zwischen dem wenigstens einen Verstellantrieb (47) und den zugeordneten verstellbaren Greifeinheiten (17a-c) Kopplungsmittel zur Übertragung der Verstellbewegung auf die Greifeinheiten (17a,b) angeordnet sind.

5. Greifeinrichtung nach Anspruch 4, **dadurch gekennzeichnet, dass** die Kopplungsmittel ein Getriebe umfassen.

6. Greifeinrichtung nach Anspruch 5, **dadurch gekennzeichnet, dass** das Getriebe als Gelenkgetriebe mit mehreren gelenkig miteinander verbundenen Gelenkhebeln ausgebildet ist.

7. Greifeinrichtung nach einem der vorhergehenden Ansprüche, **dadurch gekennzeichnet, dass** es sich bei der Verstellbewegung um eine Schwenkbewegung handelt.

8. Greifeinrichtung nach einem der vorhergehenden Ansprüche, **dadurch gekennzeichnet, dass** die Greifeinheiten (17a-c) jeweils eine Basiseinheit (20) aufweisen, die eine Befestigungsschnittstelle (21) zur lösbaren Befestigung des zugeordneten Greifelements (22a-c) aufweisen.

9. Greifeinrichtung nach Anspruch 8, **dadurch gekennzeichnet, dass** die Basiseinheit (20) mit dem Gelenkgetriebe gekoppelt und um eine Schwenkachse schwenkbar gelagert ist.

10. Greifeinrichtung nach einem der Ansprüche 8 oder 9, **dadurch gekennzeichnet, dass** die Befestigungsschnittstelle (21) eine insbesondere T-förmig ausgebildete Befestigungsnut (23) umfasst.

11. Greifeinrichtung nach einem der vorhergehenden Ansprüche, **dadurch gekennzeichnet, dass** den wenigstens zwei verstellbaren Greifeinheiten (17a, 17b) eine Blockiereinrichtung (61) mit wenigstens einem Blockierelement (62) zur Blockierung der aktuell eingestellten Ausrichtung der Arbeitsebenen (46a-c) der zugeordneten Greifelemente (22a-c) zugeordnet ist, wobei das Blockierelement (62) zwischen einer Blockierstellung und einer die Verstellbewegung ermöglichenden Freigabestellung verstellbar ist.

12. Greifeinrichtung nach Anspruch 11, **dadurch gekennzeichnet, dass** die Blockiereinrichtung (61) wenigstens einen Blockierantrieb (63) zur aktuatorischen Verstellung des Blockierelementes (62) zwischen der Blockier- und der Freigabestellung aufweist.

13. Greifeinrichtung nach einem der vorhergehenden Ansprüche, **dadurch gekennzeichnet, dass** die Greifeinheiten (17a-c) jeweils einen individuellen Greifantrieb (27a-c) aufweisen, über den die Arbeitsbewegung zwischen der Greif- und der Offenstellung erzeugbar ist.

14. Greifeinrichtung nach Anspruch 13, **dadurch gekennzeichnet, dass** der jeweilige Greifantrieb (27a-c) an Bord des Greifelements (22a-c) der Greifeinheit (17a-c) angeordnet ist.

15. Greifeinrichtung nach einem der vorhergehenden Ansprüche, **dadurch gekennzeichnet, dass** das Greifelement (22a-c) eine Greifelement-Basis (26) mit einer Befestigungsschnittstelle zur lösbaren Befestigung eines in der Greifstellung in Anlage zum Objekt befindlichen Wirkelements (36) aufweist.

16. Greifeinrichtung nach Anspruch 15, **dadurch gekennzeichnet, dass** das Wirkelement (36) als Flossenstrahlelement (64) ausgebildet ist.

17. Greifeinrichtung nach Anspruch 15 oder 16, **dadurch gekennzeichnet, dass** das Wirkelement ein Wirkglied (43) aus biegeschlaffem Material aufweist.

## Claims

1. Gripping device for the gripping of objects (12), with at least three gripping units (17a-c) which may be moved by an operating movement between a release position and a gripping position in which they grip the object (12), **characterised in that** the gripping units (17a-c) are so grouped around a gripping centre that the three or more operating planes (46a-c) of their gripping elements (22a-c) are aligned at an angle and radially relative to the gripping centre or offset parallel to one another, wherein at least two of the gripping units (17a-b) are assigned an adjusting drive unit (47) with at least one adjusting drive (48) in order to shift the operating planes (46a-c) of the gripping elements (22a-c) by actuation involving an adjusting movement between radial and offset parallel alignment.

2. Gripping device according to claim 1, **characterised in that** several, in particular two, gripping units (17a, 17b) are assigned a single adjusting drive (48), through which the operating planes (46a-c) of the gripping elements (22a-c) of the assigned gripping units (17a-c) are adjustable synchronously between radial and parallel offset alignment.

3. Gripping device according to claim 1 or 2, **characterised in that**, of the three gripping units (17a-c), at least one is mounted so as to be non-adjustable in respect of its alignment of the operating planes (46c) of the gripping element (22c).

4. Gripping device according to any of the preceding claims, **characterised in that** coupling means for transmitting the adjusting movement to the gripping units (17a,b) are provided between the adjusting drive unit or units (47) and the assigned adjustable gripping units (17a-c).

5. Gripping device available claim 4, **characterised in that** the coupling means comprise a gear.

6. Gripping device according to claim 5, **characterised in that** the gear is in the form of a link mechanism with several toggle levers hinged to one another.

7. Gripping device according to any of the preceding claims, **characterised in that** the adjusting movement involves a swivelling movement.

8. Gripping device according to any of the preceding claims, **characterised in that** each of the gripping units (17a-c) has a base unit (20) with a mounting interface (21) for releasable attachment of the assigned gripping element (22a-c).

9. Gripping device according to claim 8, **characterised in that** the base unit (20) is connected to the link mechanism and mounted pivotably around a swivel axis.

10. Gripping device according to any of claims 8 or 9, **characterised in that** the mounting interface (21) comprises a mounting slot (23), in particular T-shaped.

11. Gripping device according to any of the preceding claims, **characterised in that** the two or more adjustable gripping units (17a, 17b) are assigned a locking device (61) with at least one locking element (62) for locking the currently set alignment of the operating planes (46a-c) of the assigned gripping elements (22a-c), wherein the locking element (62) is adjustable between a locking position and a release position allowing the adjusting movement.

12. Gripping device according to claim 11, **characterised in that** the locking device (61) has at least one locking drive (63) for actuator-type adjustment of the locking element (62) between the locking and release position.

13. Gripping device according to any of the preceding claims, **characterised in that** each of the gripping units (17a-c) has an individual gripping drive (27a-c), through which the operating movement between the gripping and the open position may be generated.

14. Gripping device according to claim 13, **characterised in that** the respective gripping drive (27a-c) is located on board the gripping element (22a-c) of the gripping unit(17a-c).

15. Gripping device according to any of the preceding claims, **characterised in that** the gripping element (22a-c) has a gripping element base (26) with a mounting interface for releasable attachment of an effective element (36) in contact with the object in the gripping position.

16. Gripping device according to claim 15, **characterised in that** the effective element (36) is in the form of a fin-ray element (64).

17. Gripping device according to claim 15 or 16, **characterised in that** the effective element has an effective member (43) made of material which is slack in bending.

## Revendications

1. Dispositif de saisie destiné à la saisie d'objets (12), avec au moins trois unités de saisie (17a-c), qui sont mobiles par le biais d'un mouvement de travail entre une position de libération et une position de saisie saisissant l'objet (12), **caractérisé en ce que** les unités de saisie (17a-c) sont groupées autour d'un centre de saisie de manière telle que les au moins trois plans de travail (46a-c) de leurs éléments de saisie (22a-c) soient orientés de manière angulaire et radiale en ce qui concerne le centre de saisie ou les uns par rapport aux autres avec un décalage parallèle, dans lequel un dispositif d'entraînement réglable (47) avec au moins un entraînement réglable (48) est associé à moins deux des unités de saisie (17a-b) afin de déplacer d'une manière actionnée les plans de travail (46a-c) des éléments de saisie (22a-c) par un mouvement réglable entre des orientations radiales et des orientations décalées parallèlement les unes par rapport aux autres.

2. Dispositif de saisie selon la revendication 1, **caractérisé en ce qu'**un seul entraînement réglable (48) est associé à plusieurs, en particulier à deux unités de saisie (17a, 17b), par le biais duquel les plans de travail (46a-c) des éléments de saisie (22a-c) des unités de saisie (17a-c) associées peuvent être déplacés de manière synchrone entre des orientations radiales et des orientations décalées de manière parallèle.

3. Dispositif de saisie selon la revendication 1 ou 2, **caractérisé en ce que**, parmi les trois unités de saisie (17a-c), au moins une est disposée d'une manière ne pouvant pas être déplacée en ce qui concerne son orientation du plan de travail (46c) de l'élément de saisie (22c).

4. Dispositif de saisie selon l'une quelconque des revendications, **caractérisé en ce que**, entre le au moins un entraînement réglable (47) et les unités de saisie (17a-c) déplaçables associées, sont disposés des moyens de couplage pour la transmission du mouvement réglable aux unités de saisie (17a,b).

5. Dispositif de saisie selon la revendication 4, **caractérisé en ce que** les moyens de couplage comportent un mécanisme de transmission.

6. Dispositif de saisie selon la revendication 5, **caractérisé en ce que** le mécanisme de transmission est conçu en tant que mécanisme articulé avec plusieurs leviers articulés reliés entre eux de manière articulée.

7. Dispositif de saisie selon l'une quelconque des revendications précédentes, **caractérisé en ce que**, quant au mouvement réglable, il s'agit d'un mouvement de pivotement.

8. Dispositif de saisie selon l'une quelconque des revendications précédentes, **caractérisé en ce que** les unités de saisie (17a-c) comprennent chacune une unité de base (20) qui comprend une interface de fixation (21) pour la fixation détachable de l'élément de saisie (22a-c) associé.

9. Dispositif de saisie selon la revendication 8, **caractérisé en ce que** l'unité de base (20) est couplée au mécanisme articulé et est logée pivotante autour d'un axe de pivotement.

10. Dispositif de saisie selon l'une quelconque des revendications 8 ou 9, **caractérisé en ce que** l'interface de fixation (21) comporte une gorge de fixation (23) conçue en particulier en forme de T.

11. Dispositif de saisie selon l'une quelconque des revendications précédentes, **caractérisé en ce qu'**aux au moins deux unités de saisie (17a, 17b) pouvant être déplacées est associé un dispositif de blocage (61) avec au moins un élément de blocage (62) pour le blocage de l'orientation actuellement réglée des plans de travail (46a-c) des éléments de saisie (22a-c) associés, dans lequel l'élément de blocage (62) peut être déplacé entre une position de blocage et une position de libération rendant possible le mouvement de déplacement.

12. Dispositif de saisie selon la revendication 11, **caractérisé en ce que** le dispositif de blocage (61) comporte au moins entraînement de blocage (63) pour le déplacement actionné de l'élément de blocage (62) entre la position de blocage et la position de libération.

13. Dispositif de saisie selon l'une quelconque des revendications précédentes, **caractérisé en ce que** les unités de saisie (17a-c) comprennent chacune un entraînement de saisie individuel (27a-c) par le biais duquel le mouvement de travail entre la position de saisie et la position ouverte peut être produit.

14. Dispositif de saisie selon la revendication 13, **caractérisé en ce que** ledit entraînement de saisie (27a-c) est disposé à bord de l'élément de saisie (22a-c) de l'unité de saisie (17a-c).

15. Dispositif de saisie selon l'une quelconque des revendications précédentes, **caractérisé en ce que** l'élément de saisie (22a-c) comprend une base d'élément de saisie (26) avec une interface de fixation pour la fixation détachable d'un élément actif (36) se trouvant dans la position de saisie en appui sur l'objet.

16. Dispositif de saisie selon la revendication 15, **caractérisé en ce que** l'élément actif (36) est conçu en tant qu'élément de type rayon de nageoire (64).

17. Dispositif de saisie selon la revendication 15 ou 16, **caractérisé en ce que** l'élément actif comprend un organe actif (43) fait d'un matériau lâche à la flexion.
